# EUROPEAN PATENT SPECIFICATION

(11) **EP 0 665 198 B1**
(45) Date of publication and mention of the grant of the patent: **01.07.1998**
(21) Application number: 95101076.8
(22) Date of filing: 26.01.1995
(51) Int. Cl.: C04B 41/85, C22B 21/06

(54) **Impact resistant oxidation protection for graphite parts**
Schlagfeste oxidationsbeständige Beschichtung für Graphitteile
Revêtement anti-oxydation résistant aux chocs pour éléments en graphite

(30) Priority: 27.01.1994 US 186950
(43) Date of publication of application: 02.08.1995
(73) Proprietor: FOSECO INTERNATIONAL LIMITED, Nechells Birmingham B7 5JR (GB)
(72) Inventor: Pelton, John Franklin, Yorktown Heights, New York 10598 (US)
(74) Representative: Schwan, Gerhard, Dipl.-Ing.

(56) References cited:
- EP-A- 0 073 729
- EP-A- 0 176 055
- EP-A- 0 476 534
- DE-A- 2 703 814
- FR-A- 2 697 016
- PATENT ABSTRACTS OF JAPAN vol. 015 no. 345 (C-0864),3 September 1991 & JP-A-03 134172 (SUMITOMO METAL MINING CO LTD) 7 June 1991

## Description

### BACKGROUND OF THE INVENTION

### Field of the Invention

The invention relates to the refining of aluminum. More particularly, it relates to the protection of the graphite stator used in aluminum refining operations from oxidation.

### Description of the Prior Art

In the refining of aluminum, a rotating nozzle is commonly employed to disperse a refining gas into a body of molten aluminum contained in a refining vessel. A graphite rotor is used for this purpose, with said graphite rotor being carried on, and driven by, a graphite shaft. In turn, the graphite shaft is fastened to, and driven by, a metal shaft. The two shafts are fastened together by a threaded connection that holds the shafts in proper alignment with one another so that they can rotate as a unitary structure.

In commercial Spinning Nozzle Inert Flotation SNIF® aluminum refining systems supplied by Praxair, Inc., the graphite spinning nozzle assembly includes an outer graphite stator as well as an inner graphite rotating shaft having a graphite rotor at the bottom end thereof. Such a spinning nozzle assembly is installed in a refining chamber, which is filled with molten aluminum up to an idle level. During the refining operations, the molten aluminum level will rise to a higher operating level. An inert process gas will then be supplied to the spinning nozzle rotor for dispersion in the molten aluminum, forming gas bubbles that eventually rise to the surface of the molten aluminum. The gas will then leave through any opening in the refining chamber. By keeping these openings small, back diffusion of air into the gas space above the molten aluminum, i.e., the headspace of the refining chamber, is very low, and this gas space is very inert.

During the idle periods of the refining system, which may be a majority of the time, no process gas is being supplied to the refining chamber, but there is usually a small flow of inert gas into the headspace. However, unless very special, and costly, care is taken to seal all openings, there will be some flow of air into the headspace. Thus, an oxidating atmosphere will exist therein. In some cases, this flow of air is so large that the oxygen content in the headspace is about the same as the oxygen content of air. Under these circumstances, the exposed portion of the graphite stator may oxidize fairly rapidly in spite of the prior impregnation of this graphite with the best available oxidation retarding materials. Such oxidation is usually most rapid near the idle molten aluminum surface because the part of the stator exposed to the headspace is the hottest at this point, and sometimes because thermal convection air flow into the headspace and its impingement on the stator is the strongest at this location. The part of the graphite stator that is always submerged in the molten aluminum does not oxidise because the molten aluminum excludes contact of the submerged portion of the graphite stator with oxygen in the headspace. The upper portion of the graphite stator in the refining chamber, which extends further upward through the roof of the refining chamber, oxidizes very slowly, if at all, because the upper portion of the refining chamber is much cooler than the lower portions of the headspace near the idle level of the molten aluminum in the refining chamber.

The oxidation in the lower portion of the headspace leads to failure of the graphite stator. First, the flow of process gas out through the natural porosity of the graphite stator increases because the oxidation action increases this porosity. Eventually, such oxidation produces a hole in the side of the stator, usually near the idle level, and the entire process gas flow is lost through such a leak in the stator. Even before this disastrous loss of process gas occurs, the graphite stator may be so weakened by the oxidation process that it will become broken in the course of refining system cleaning operations that would not adversely affect a stator not subject to such undesired oxidation.

There have been many attempts to provide effective oxidation protection for the graphite stator. Some of such attempts have been partially successful, and others completely successful under a very limited set of circumstances. Thin protective coatings, i.e. a few mils thick, have generally been unsuccessful, as there will invariably be some small cracks or porous areas in the coatings. Oxygen diffusing through these small openings, in spite of inert gas counter flow, will slowly oxidize the graphite material of the stator desired to have oxidation protection. Since the product of oxidation of such graphite is a gas, i.e. carbon monoxide, the graphite is eaten away under the supposedly protective coating. The coating is then readily broken away from the surface of the graphite stator at the slightest touch in the course of cleaning operations, or the coating may be carried away from the graphite stator it is intended to protect by turbulence in the body of molten aluminum during aluminum refining operations in the refining chamber.

Thick coverings of oxidation protective coatings, capable of excluding oxygen from the surface of the graphite stator, have been provided by two methods. One such method is to pre-form a refractory sleeve that is placed onto the graphite stator in the vulnerable zone thereof. The other method is to form a relatively thick coating on the vulnerable part of the graphite stator by applying a refractory mortar or cement. This coating may be reinforced by incorporating into it one or more layers of fiberglass cloth. Both of these methods then provide a protective covering that will inhibit oxidation of the graphite stator to a useful degree, so long as the protective coating or sleeve remains intact. Under many operating conditions, however, the protective coatings or sleeve will be cracked or chopped away from the surface of the graphite stator during refining vessel cleaning operations.

JP-A-03 134 172 seeks to improve the adhesive properties between the BN films in corner parts and a graphite base body. Thereby, the corner parts were previously provided with grooves of a specific size on both sides in the corner parts at the time of forming the BN films by a CVD method on the basic body. Thus, BN films being free from rupture and peeling in heat cycles of heating and cooling are formed.

EP-A-0 176 055 relates to oxidation resistant carbon bodies for application inter allia as electrodes in electrochemical processes, whereby a body of carbon into the surface of which an etched and filled layer extending to a predetermined depth in the body is provided. Said layer comprises substantially silicon carbide and silicon boride.

There is a genuine need in the aluminum refining art, therefore, for an improved oxidation protective coating for the graphite stator of aluminum refining systems. In particular, there is a need for a protective coating or covering on the graphite stator that will substantially reduce the destructive oxidation effect on the stator, and will be resistant to breakage during cleaning operations, so as to greatly increase the useful life of said graphite stator.

### Summary of the Invention

The graphite stator or other graphite parts of an aluminum refining system are surrounded with a refractory sleeve formed in place on the graphite stator or other graphite parts. Longitudinal grooves, and either circular grooves or end shoulders, are used to lock the refractory sleeve to the graphite stator or other such part. The resistance of the sleeve to impact damage is thereby greatly increased.

### Brief Description of the Drawings

The invention is hereinafter further described with reference to the accompanying drawings in which:
Fig. 1 is a side elevational view of an aluminum refining chamber with a spinning nozzle assembly positioned therein;
Fig. 2 is a side elevational view of a flat coating layer of refractory material formed on a substrate of relatively rigid solid material;
Fig. 3 is a side elevational view of the structure of Fig. 2 upon impact of a chisel or pointed tool driven into said coating layer;
Fig. 4 is a side elevational view of the structure of Fig. 2 upon impact with a flat or rounded object;
Fig. 5 is a side elevational view of an embodiment of the invention wherein the coating layer is formed on a substrate of relatively rigid solid material having grooves cut in the surface of said substrate;
Fig. 6 is a plan view of the flat surface of graphite material prior to the application of a protective coating thereto, illustrating a square pattern of grooves therein;
Fig. 7 is a cross sectional view of an ungrooved graphite cylindrical substrate coated with a coating of refractory material upon impact with a chisel or pointed tool driven into the coating layer;
Fig. 8 is a cross sectional view of a cylindrical graphite substrate having axial direction grooves present and coated with a coating of refractory material upon impact with a chisel or pointed tool driven into the coating layer;
Fig. 9 is a side elevational view of a cylindrical graphite substrate as shown in Fig. 8, having axial direction grooves (not shown) with a coating of refractory material positioned thereon upon impact with a chisel or pointed tool driven into the coating near the center thereof at point A, and near one end thereof at point B;
Fig. 10 is a side elevational view of the cylindrical graphite substrate of Fig. 8, but with shoulders on the graphite part at each end of the cylindrical coating upon impact with a chisel or pointed tool driven into the coating at one end thereof;
Fig. 11 is a plan view of the cylindrical graphite stator with interrupted axial direction grooves positioned therein in one embodiment of the invention;
Fig. 12 is a plan view of the cylindrical graphite stator with a series of axial and circumferential direction grooves positioned therein in another embodiment of the invention; and
Fig. 13(A), Fig. 13(B), Fig. 13(C), Fig. 13(D), Fig. 13(E) and Fig. 13(F) are side elevational views of a variety of groove shapes that can be employed in various embodiments of the invention.

### Detailed Description of the Invention

The objects of the invention are accomplished by the provision of a graphite part as defined in claims 1 and 12. In particular, the invention provides for an oxidation protective coating formed in place on the graphite part and locked to the graphite part by a series of grooves in the graphite part so as to reinforce the oxidation protective coating against breakage upon impact during cleaning. The impact resistance provided by the invention enables the useful life of a graphite stator or other graphite parts to be greatly increased beyond those of graphite parts having such oxidation protective coatings not having such impact resistance feature.

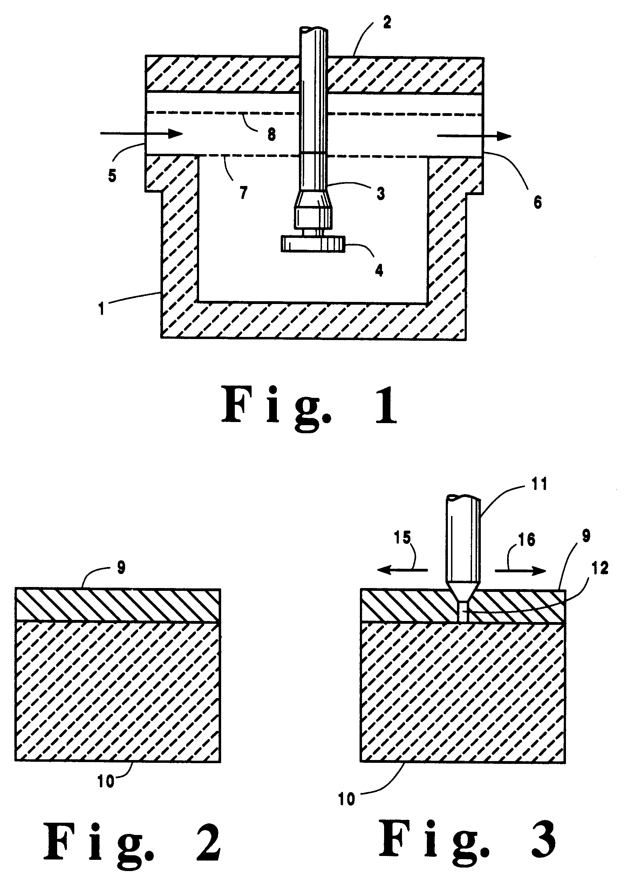

The aluminum refining systems employing a spinning nozzle assembly are typically as shown in Fig. 1 of the drawings, wherein a refining chamber is generally represented by the numeral 1, said refining chamber having cover or roof 2. The spinning nozzle assembly includes graphite stator 3 and graphite rotor 4. Refining chamber 1 has inlet 5 for the passage of molten aluminum to the chamber, and outlet 6 for the passage of molten aluminum therefrom. During periods of idle in the operation of the refining system, molten aluminum is present in refining chamber 1 at idle level 7, with an oxidizing atmosphere generally being present in the headspace above the idle level of molten aluminum. The molten aluminum is at the higher operating level 8 during aluminum refining operations. The invention is directed to the providing of oxidation protection for the graphite stator and other graphite parts, such as baffles or partitions, as desired. In particular with respect to the graphite stator, the practice of the invention enables the undesired, premature failure of the graphite stator, as discussed above, to be overcome so as to greatly increase the useful life of said stator to the benefit of the overall aluminum refining system.

If a loose sleeve of refractory material on a graphite cylinder is struck with a hard object, such as a hammer, in an area that is not tight against the graphite, bending forces will be generated locally. Cracks may start on the tensile side and propagate through and along the sleeve. If, however, the sleeve is formed on the graphite part so that there is intimate contact between the sleeve and the graphite part at all places, then the bending forces produced by a blow to the surface is greatly reduced, being limited to the extent that the graphite is deformed by the compressive force transmitted to it. In this case, the refractory sleeve is much stronger, and the final failure mechanism is quite different and is significantly extended in time so as to avoid premature failure of the graphite part.

To illustrate the above, attention is drawn to a flat layer of ceramic or other refractory coating material 9 formed on a relatively rigid, solid material substrate 10, as shown in Fig. 2 of the drawings. If a chisel or pointed tool 11 is driven into the coating, it tends to split apart as shown in Fig. 3, developing crack 12 in said coating layer 9. When the coating is struck by a flat or rounded object 13, on the other hand, the refractory coating material in the impact zone is driven toward substrate 10 as shown in Fig. 4 of the drawings. This impact action may shear off a piece of refractory coating layer 9 in wedge shape 14, or it may crush and powder the refractory coating material in said wedge shape 14, as well as opening a crack 12 under said wedge shape 14. In either case, sideways forces 15 and 16 are generated that push coating 9 apart, as with said sideways forces 15 and 16 generated by chisel or pointed tool 11 upon being driven into coating 9 in the Fig. 3 embodiment. If the coating adheres strongly to the substrate, it will have much greater resistance to being split apart as compared to a coating that is only lightly attached.

In the use of refractory materials or graphite, however, such advantageous attachment that may be produced will not survive for long under the operating temperatures and atmospheres existing during aluminum refining operations. Very slight oxidation of the graphite at the interface and/or differential thermal expansion of the graphite and most refractory materials of interest will destroy and bond that was originally present between the graphite and refractory materials.

It has been found that when particular grooves are cut into the graphite substrate surface in at least the exposed portion of the substrate graphite part, before the refractory coating is applied to the substrate, and the refractory coating material is forced into these grooves during the coating operation, the resistance to impact damage is greatly increased so that the useful life of a graphite stator or other graphite part is appreciably extended.

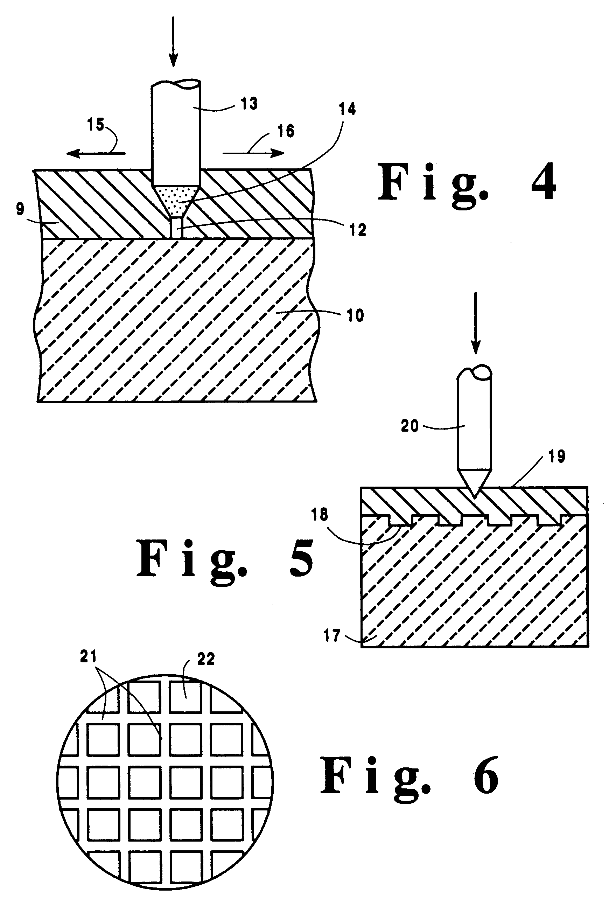

This desirable practice of the invention is illustrated in Fig. 5 of the drawings. Graphite substrate 17 is shown with grooves 18 cut therein. Refractory layer 19 is formed on said graphite substrate 17 with refractory coating material from said layer being forced into said grooves 18 in said substrate. It will be appreciated that said grooves 18 serve to keep refractory layer 19 from splitting apart when a chisel or other pointed tool is driven into said refractory layer 19. Thus, the sideways force of the coatings under such impact, which would otherwise tend to split refractory layer 19 apart, are transmitted to graphite substrate 17 by the refractory coating material in said grooves 18, thus greatly increasing the resistance of the coating, i.e. refractory layer, to impact damage.

In the case of a flat surface in the illustrations of Figs. 2-5, a square pattern of grooves, such as shown in Fig. 6 of the drawings, is very effective. Thus, a square pattern of grooves 21 is provided on flat surface 22 prior to the application of a refractory layer thereto, with refractory material applied to said flat surface passing into the grooves as an inherent part of the coating operation. When this concept is translated to the coating of the refractory layer on a cylindrical graphite part, e.g., a graphite stator, the requirements are somewhat different than those pertaining to a flat surface. It was found that when a refractory coating in an ungrooved cylindrical graphite part was hit hard enough, or enough times in the same place, to produce a crack, the resulting crack was invariably formed in an axial direction. Thus, a pattern of grooves positioned in the axial direction was found very effective in increasing the force of blows required before a crack was produced in the refractory layer. When an ungrooved cylindrical part is damaged further, after a crack is formed, pieces of coating are easily pushed off of the graphite part in the manner shown in Fig. 7 of the drawings, wherein cylindrical graphite substrate is represented by the numeral 23, with refractory layer 24 formed thereon. When pointed tool 25 is driven into said refractory layer 24, thereby forming crack 26 therein, a portion of said refractory layer 24 tends to be pushed off of graphite substrate 23, resulting in annular spacing 27 being present between a portion of refractory layer 24 and graphite substrate 23. On the other hand, when axial direction grooves are cut in said graphite substrate 24, i.e., axial direction grooves 28 as shown in Fig. 8 of the drawings, there is found to be continuing resistance to the pushing off of refractory coating 24 from graphite substrate 23, even after an initial axial direction crack 26 is formed in refractory layer 24 as a result of pointed tool 25 having been driven into said refractory coating 24.

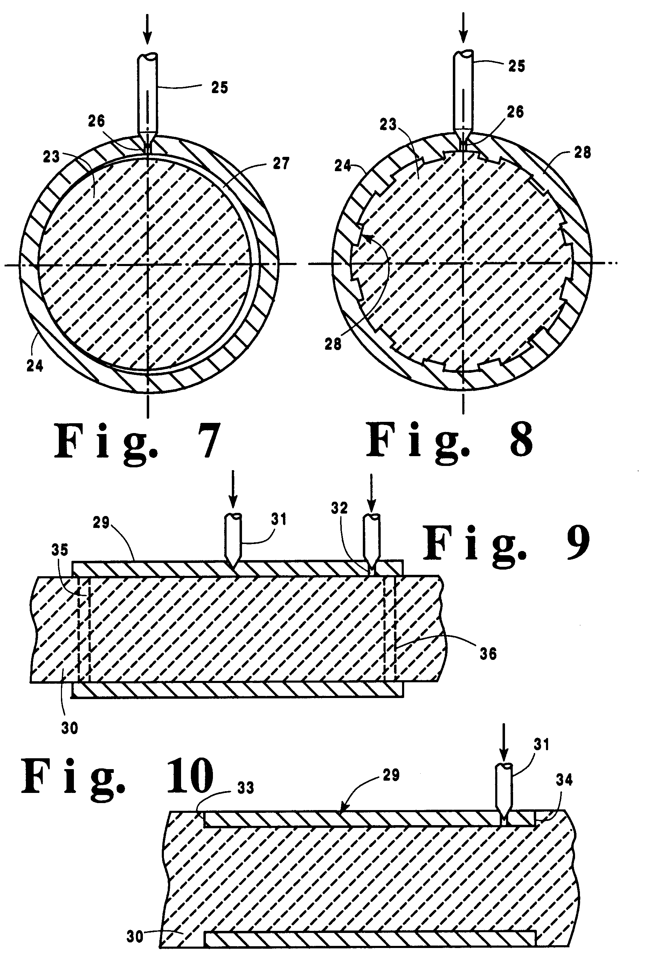

A coating of refractory material, i.e., refractory layer 29, several cylindrical graphite substrate diameters long, is applied to cylindrical graphite substrate 30 shown in Fig. 9 of the drawings, said refractory layer 29 having axial direction grooves (not shown) formed therein. When such a coating is struck with a pointed tool 31 near the center of said length of coating, e.g., as at point A, it is found to be fairly resistant to cracking perpendicular to the axis of cylindrical graphite substrate 30. This is because the opening of a crack would require a long cylindrical piece of coating to slide axially on either or both sides of point A to form a crack. When refractory layer 29 is struck by pointed tool 31 near one end thereof, as at point B, only a small section of one side of the cylindrical coating 24 has to move axially, i.e., slightly to the right in the embodiment illustrated in Fig. 9, and thus much less impact will cause a crack 32 to open in refractory layer 29. To counter such undesired crack formation, it is desirable to have some restraint against such refractory layer 29 movement in the axial directions at the ends of said refractory layer 29. A convenient means for achieving such restraint is to provide shoulders on both ends of refractory layer 29, i.e., shoulders 33 and 34 in cylindrical graphite substrate 30 as shown in Fig. 10 of the drawings. When such a refractory layer formed on a cylindrical substrate having shoulders on both ends of said refractory layer is struck with pointed tool 31, the axial sliding of refractory layer 29, and the undesired opening of a crack therein, is effectively precluded. It should be noted that it is also within the scope of the invention to preclude such axial sliding of the refractory layer by providing circumstantial grooves in the cylindrical graphite substrate near the ends of the portion of said substrate on which the refractory layer is to be coated. In the course of the coating operation, refractory material will pass into said circumferential grooves so as to form an anchoring portion thereof that serves to preclude axial movement of the refractory layer in a manner to that achieved by the providing of shoulders in the cylindrical graphite substrate. Such circumferential grooves in the substrate are indicated by the numerals 35 and 36 at the opposite ends of refractory layer 29 in Fig. 9, it being understood that refractory layer material would fill such circumferential grooves during the coating operation and create the desired restraint to movement of the refractory layer, or a portion thereof, in the axial direction. In the case where the coated length of the graphite cylindrical substrate is many times longer than the diameter of the cylindrical part, it may be beneficial to provide additional circumferential grooves at several locations, i.e., in the midsection, as well as at the ends of the coated area.

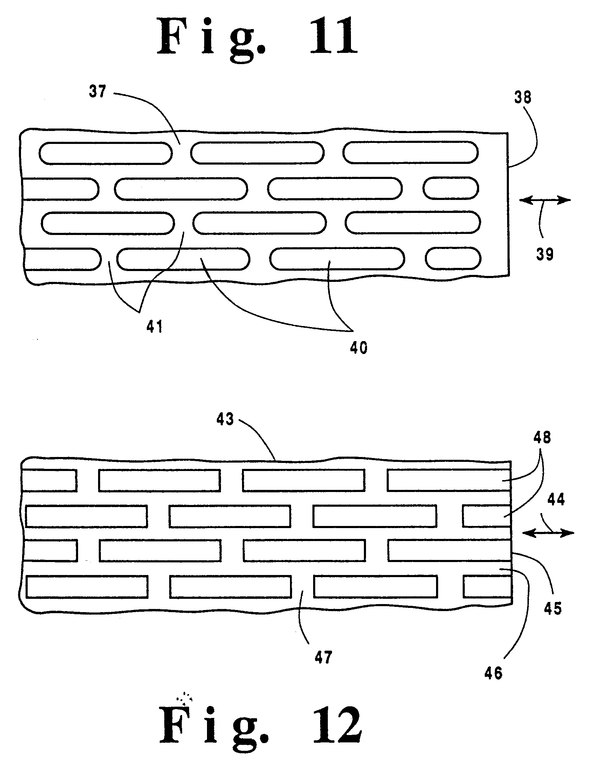

It will be appreciated by those skilled in the art that various changes or modifications can be made in the details of the invention as set forth in the appended claims. Thus, the refractory coating can be locked onto the graphite part in both directions by other groove patterns, e.g., the groove patterns as showing in Figs. 11 and 12 of the drawings. Thus, the axial direction grooves may be interrupted as shown in Fig. 11, wherein a partial surface of cylindrical substrate is represented by the numeral 37, with end surface 38 representing the end of the portion of the substrate to be coated. The axial direction of the substrate is indicated by the numeral 39. Axial direction grooves 40 are provided in cylindrical substrate 37 prior to the applying of a refractory coating layer to the desired portion of the substrate. As shown in said Fig. 11, the gaps 41 between axial direction grooves from one axial groove to the other are preferably staggered for enhanced locking of the refractory layer coating to the cylindrical graphite substrate.

In the embodiment of Fig. 12, a series of circumferential grooves is interrupted to provide the desired coating-substrate locking action. As shown therein, partial surface 43 of a cylindrical substrate, having an axial direction indicated by the numeral 44 and end 45 of the desired covered portion, has continuous, non-interrupted axial direction grooves 46 provided therein. Interrupted circumferential grooves 47 are provided with lands 48 positioned so as to provide a preferable staggered effect of said interrupted circumferential grooves.

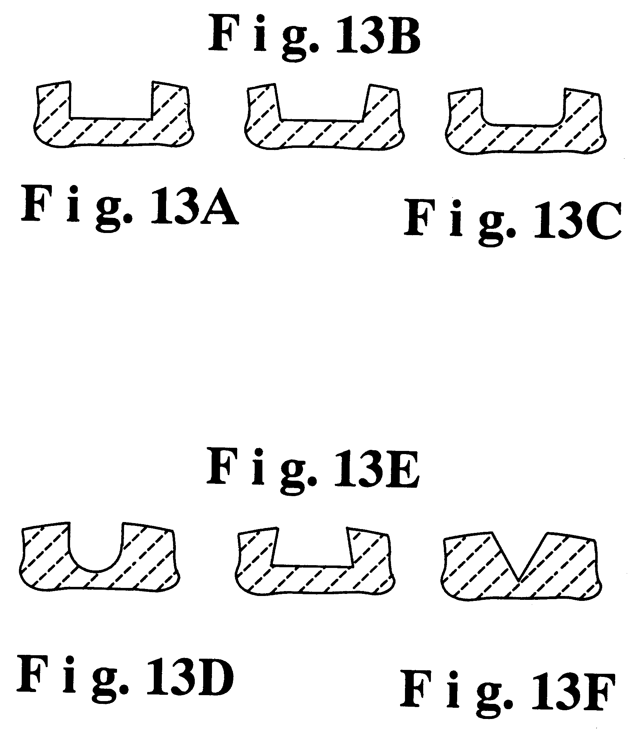

Those skilled in the art will appreciate that a variety of groove shapes can be cut in the graphite substrate for purposes of the invention. The shape illustrated in Fig. 13A is readily cut with a standard high speed router bit and may be preferred for this reason. If a single point shaped tool is used to cut the grooves, then slightly slanting sides, as shown in Fig. 13B, will make the grooves somewhat easier to cut. The other shapes illustrated in Figs. 13C, 13D and 13E are useful and may be employed, but have no particular advantage over the other groove shapes. The V-shaped groove of Fig. 13F can also be used, but will probably not be as beneficial as grooves not having such steeply slanting sides.

When applying coatings of easily applied air setting refractory mortars to a graphite substrate, coating thicknesses of about 1/8 inch to 1/4 inch are generally preferred. With coatings in this thickness range, the grooves should generally be from about 1/16 inch to 1/4 inch in width, with a depth of about 1/4 to 1/2 of the width of the groove. The land or space between grooves should generally be on the order of about 1/2 to 3 times the groove width. Those skilled in the art will appreciate from the above that larger or smaller grooves than those indicated can be employed and may be desirable in particular applications. The number of grooves employed may be varied, using more or fewer, as required and convenient to produce the desired effect of locking of a particular refractory layer to the graphite substrate.

The desired coating can be made of any refractory mortar or cement that can be formed around the graphite part to be protected and that has suitable properties for the intended applications. It has been found, however, that air setting refractory mortars which harden by drying, are more easily handled than other types of cement or mortar. The Fraxbond® 3000 mortar supplied by the Carborundum Co. has been found particularly useful for purposes of the invention, although various other commercially available refractory cements or mortars can also be employed.

The refractory coating used in the practice of the invention may also be a refractory cement or mortar reinforced with fiberglass cord or cloth, or an alumina-silica fiber cord or cloth, such as Nextel® supplied by 3M Co., but such reinforcement is not essential to the invention. When fiberglass cord or cloth is used, it is unlikely that it adds much strength to the coating as used in molten aluminum refining after it has been in service for a period of time. The very small fibers that give such materials considerable strength at room temperature frequently sinter or fuse together at aluminum refining temperatures, transforming the multi-fiber cord into a solid glass rod. Such reinforcement does, however, add to the room temperature resistance to impact damage, and thus may be useful for purposes of avoiding handling damage to a graphite stator or other graphite part before it is in position in the refining chamber of an aluminum refining system. Such reinforcement may also help to control shrinkage cracking during drying or curing of the refractory coating on the graphite part.

The invention will be seen as representing a significant advance in the aluminum refining art. By providing a refractory layer on a graphite substrate, with enhanced resistance of said refractory layer to impact damage during handling, use and cleaning operations, the invention serves to appreciably reduce the breakage of the refractory layer that commonly occurs during such handling, use and cleaning operations. The invention thus overcomes the serious problem of premature graphite stator or other part failure commonly encountered in aluminum refining operations.

## Claims

1. A graphite part suitable for use in the refining chamber of an aluminum refining system and having protection against premature failure due to the oxidation thereof, comprising:
(a) a substrate graphite part adapted for positioning in the refining chamber, said substrate graphite part, or a portion thereof, being exposed to an oxidizing atmosphere during idle periods in the operation of said aluminum refining system, at least the exposed portion of said substrate graphite part having grooves thereon for filling with a refractory coating material upon the coating of a refractory coating layer thereon;
(b) a refractory coating layer deposited on said exposed portion of the substrate graphite part, the material of the refractory coating filling the grooves in said substrate graphite part, said grooves and the refractory coating therein being positioned so as to lock the refractory coating layer to the substrate graphite part, thereby precluding undesired movement of the refractory coating layer on the surface of the substrate graphite part,
whereby the refractory coating layer has enhanced resistance to impact, minimizing damage thereto during handling, installation and use in aluminum refining operations and in cleaning operations in the refining chamber, thereby increasing the useful life of the graphite part and preventing premature failure thereof.

2. The graphite part of claim 1 in which the exposed portion of the substrate graphite part is a flat surface, said grooves being arranged essentially in a square pattern, whereby the sideways forces of an impact on the refractory coating layer are transmitted to the flat substrate graphite part, thus greatly increasing the resistance of the refractory coating layer to impact damage.

3. The graphite part of claim 1 in which the exposed portion of the substrate graphite part is a cylindrical surface, said grooves being aligned in an axial direction, whereby the sideways forces of an impact on the refractory coating layer are transmitted to the cylindrical substrate graphite part, thus substantially increasing the force of impact, or the number of impacts, resulting in a crack in the refractory coating layer and greatly increasing the resistance of the refractory coating layer to being pushed off the surface of said cylindrical surface of the substrate graphite part.

4. The graphite part of claim 3 and including a shoulder portion in said substrate graphite part at each end of the exposed portion thereof having said refractory coating layer deposited thereon, thereby increasing the resistance of said refractory coating layer to movement in an axial direction upon impact near either axial end of said refractory coating layer.

5. The graphite part of claim 3 and including circumferential grooves in said substrate part at each end of the exposed portion thereof having said refractory coating layer deposited thereon, thereby increasing the resistance by said refractory coating layer to movement in an axial direction upon impact near either axial end of said refractory coating layer.

6. The graphite part of claim 5 and including one or more additional circumferential grooves in said substrate graphite part at intermediate locations between the ends of the exposed portion of said substrate graphite part.

7. The graphite part of claim 3 in which said axial grooves are interrupted, so as to provide gaps in said grooves in an axial direction.

8. The graphite part of claim 7 in which said gaps between interrupted portions of the axial grooves are staggered from one axial direction groove to the next said axial direction groove.

9. The graphite part of claim 5 in which said circumferential grooves are interrupted, so as to provide gaps in said grooves in a circumferential direction.

10. The graphite part of claim 9 in which said axial grooves are interrupted so as to provide gaps in said grooves in an axial direction.

11. The graphite part of claim 3 in which said graphite part comprises a graphite stator.

12. A substrate graphite part suitable for use in the refining chamber of an aluminum refining system and adapted for positioning in the refining chamber, said substrate graphite part, or a portion thereof, being exposed to an oxidizing atmosphere during idle periods in the operation of said aluminum refining system, the exposed portion of said substrate graphite part having grooves thereon for filling with a refractory coating material upon the coating of a refractory coating layer thereon, said grooves being positioned so that, upon the filling thereof with refractory coating material upon deposit of said refractory layer thereon, the refractory coating layer will be locked to the substrate graphite part, thereby precluding undesired movement of the refractory coating layer on the surface of the substrate graphite part,
whereby the refractory coating layer deposited on said substrate graphite part has enhanced resistance to impact, minimizing damage thereto during handling, installation and use in aluminum refining operations and in cleaning operations in the refining chamber, thereby increasing the useful life of the graphite part and preventing premature failure thereof.

13. The substrate graphite part of claim 12 in which the exposed portion of the substrate graphite part is a flat surface, said grooves being arranged essentially in a scare pattern, whereby the sideways forces of an impact on a refractory coating deposited on the exposed portion of the substrate graphite part are transmitted to the flat substrate graphite part, thus greatly increasing the resistance of the refractory coating layer to impact damage.

14. The substrate graphite part of claim 12 in which the exposed portion of the substrate graphite part is a cylindrical surface, said grooves being aligned in an axial direction.

15. The substrate graphite part of claim 14 and including a shoulder portion of said substrate graphite part at each end of the exposed portion thereof to be coated with a refractory coating layer.

16. The substrate graphite part of claim 14 and including circumferential grooves in said substrate graphite part at each end of the exposed portion thereof to be coated with a refractory coating layer.

17. The substrate graphite part of claim 14 in which said axial grooves are interrupted so as to provide gaps in said grooves in an axial direction.

18. The substrate graphite part of claim 17 in which said gaps between the interrupted portions of the axial grooves are staggered from one axial direction groove to the next axial direction groove.

19. The substrate graphite part of claim 16 in which said circumferential grooves are interrupted, so as to provide gaps in said grooves in a circumferential direction.

20. The substrate graphite part of claim 14 in which said substrate graphite part comprises a graphite stator.

## Patentansprüche

1. Graphitteil, das sich zum Gebrauch in der Raffinierkammer eines Aluminiumraffinationssystems eignet und mit einem Schutz gegen vorzeitiges oxidationsbedingtes Versagen versehen ist, mit:
(a) einem Graphitsubstratteil, welches in der Raffinierkammer angeordnet werden kann, wobei das Graphitsubstratteil oder ein Teil davon während Ruheperioden im Betrieb des Aluminiumraffinationssystems gegenüber einer oxidierenden Atmosphäre freiliegt, wobei mindestens der freiliegende Teil mit Nuten versehen ist, die sich bei dem Beschichten mit einer feuerfesten Beschichtungslage mit einem feuerfesten Beschichtungswerkstoff füllen;
(b) einer feuerfesten Beschichtungslage, die auf den freiliegenden Teil des Graphitsubstratteils aufgebracht ist, wobei der feuerfeste Beschichtungswerkstoff die Nuten des Graphitsubstratteils füllt, wobei die Nuten und die feuerfeste Beschichtung darin so angeordnet sind, daß die feuerfeste Beschichtungslage auf dem Graphitsubstratteil arretiert ist, wodurch eine unerwünschte Bewegung der feuerfesten Beschichtungslage auf der Oberfläche des Graphitsubstratteils verhindert wird,
wodurch die feuerfeste Beschichtungslage eine verbesserte Beständigkeit gegenüber Erschütterungen aufweist, so daß Schäden während der Handhabung, der Installation und dem Gebrauch bei Aluminiumraffinationsvorgängen und Reinigungsvorgängen der Raffinationskammer minimiert werden, wodurch die Gebrauchsdauer des Graphitteils gesteigert und dessen vorzeitiges Versagen ausgeschlossen wird.

2. Graphitteil nach Anspruch 1, wobei der freiliegende Teil des Graphitsubstratteils eine flache Oberfläche ist und wobei die Nuten im wesentlichen in einem quadratischen Muster angeordnet sind, wodurch seitwärts gerichtete Kräfte bei einer Erschütterung der feuerfesten Beschichtungslage auf die flache Oberfläche des Graphitsubstratteils übertragen werden, wodurch die Beständigkeit der feuerfesten Beschichtungslage gegenüber Erschütterungen erheblich gesteigert wird.

3. Graphitteil nach Anspruch 1, wobei der freiliegende Teil des Graphitsubstratteils eine zylindrische Oberfläche ist und wobei die Nuten in einer axialen Richtung ausgerichtet sind, wodurch seitwärts gerichtete Kräfte einer Erschütterung der feuerfesten Beschichtungslage auf die zylindrische Oberfläche des Graphitsubstratteils übertragen werden, so daß eine erheblich größere Erschütterungskraft bzw. eine erheblich größere Anzahl an Erschütterungen erforderlich ist, um einem Sprung in der feuerfesten Beschichtungslage zu bewirken und die Beständigkeit der feuerfesten Beschichtungslage gegen ein Wegschieben von der zylindrischen Oberfläche des Graphitsubstratteils erheblich gesteigert wird.

4. Graphitteil nach Anspruch 3, ferner versehen mit einem Schulterbereich in dem Graphitsubstratteil an jedem Ende des freiliegenden Teils davon, auf den die feuerfeste Beschichtungslage aufgebracht ist, wodurch die Beständigkeit der feuerfesten Beschichtungslage gegenüber Bewegungen in einer axialen Richtung bei Erschütterungen nahe einem der axialen Enden der feuerfesten Beschichtungslage gesteigert wird.

5. Graphitteil nach Anspruch 3, ferner versehen mit in Umfangsrichtung verlaufenden Nuten in dem Graphitsubstratteil an jedem Ende des freiliegenden Teils davon, auf den die feuerfeste Beschichtungslage aufgebracht ist, wodurch die Beständigkeit der feuerfesten Beschichtungslage gegenüber Bewegungen in einer axialen Richtung bei Erschütterungen nahe einem der axialen Enden der feuerfesten Beschichtungslage gesteigert wird.

6. Graphitteil nach Anspruch 5, ferner versehen mit einer oder mehreren zusätzlichen in Umfangsrichtung verlaufenden Nuten in dem Graphitsubstratteil an Zwischenstellen zwischen den Enden des freiliegenden Teils des Graphitsubstratteils.

7. Graphitteil nach Anspruch 3, bei welchem die axialen Nuten unterbrochen sind, um für Spalte in den Nuten in axialer Richtung zu sorgen.

8. Graphitteil nach Anspruch 7, bei welchem die Spalte zwischen den unterbrochenen Abschnitten der axialen Nuten von einer axialen Nut zur nächsten versetzt sind.

9. Graphitteil nach Anspruch 5, bei welchem die in Umfangsrichtung verlaufenden Nuten unterbrochen sind, um für Spalte in den Nuten in einer Umfangsrichtung zu sorgen.

10. Graphitteil nach Anspruch 9, bei welchem die axialen Nuten unterbrochen sind, um für Spalte in den Nuten in einer axialen Richtung zu sorgen.

11. Graphitteil nach Anspruch 3, bei welchem das Graphitteil ein Graphitstator ist.

12. Graphitsubstratteil, das sich zum Gebrauch in der Raffinierkammer eines Aluminiumraffinationssystems eignet und dafür ausgelegt ist, in der Raffinierkammer angeordnet zu werden, wobei das Graphitsubstratteil oder ein Teil davon während Ruheperioden im Betrieb des Aluminiumraffinationssystems gegenüber einer oxidierenden Atmosphäre freiliegt, wobei der freiliegende Teil des Graphitsubstratteils mit Nuten versehen ist, die sich bei dem Beschichten mit einer feuerfesten Beschichtungslage mit einem feuerfesten Beschichtungswerkstoff füllen, und wobei die Nuten so angeordnet sind, daß dann, wenn sie sich beim Aufbringen der feuerfesten Lage mit dem feuerfesten Beschichtungswerkstoff füllen, die feuerfeste Beschichtungslage auf dem Graphitsubstratteil arretiert wird, wodurch eine unerwünschte Bewegung der feuerfesten Beschichtungslage auf der Oberfläche des Graphitsubstratteils verhindert wird,
wodurch die auf das Graphitsubstratteil aufgebrachte feuerfeste Beschichtungslage eine verbesserte Beständigkeit gegenüber Erschütterungen aufweist, so daß Schäden während der Handhabung, der Installation und dem Gebrauch bei Aluminiumraffinationsvorgängen und Reinigungsvorgängen der Raffinationskammer minimiert werden, wodurch die Gebrauchsdauer des Graphitteils gesteigert und dessen vorzeitiges Versagen ausgeschlossen wird.

13. Graphitsubstratteil nach Anspruch 12, bei welchem der freiliegende Teil des Graphitsubstratteils eine flache Oberfläche ist und wobei die Nuten im wesentlichen in einem quadratischen Muster angeordnet sind, wodurch seitwärts gerichtete Kräfte bei einer Erschütterung der auf die Oberfläche des Graphitsubstratteils aufgebrachten feuerfesten Beschichtung auf das flache Graphitsubstratteil übertragen werden, wodurch die Beständigkeit der feuerfesten Beschichtungslage gegenüber Erschütterungen erheblich gesteigert wird.

14. Graphitsubstratteil nach Anspruch 12, wobei der freiliegende Teil des Graphitsubstratteils eine zylindrische Oberfläche ist und wobei die Nuten in einer axialen Richtung ausgerichtet sind.

15. Graphitsubstratteil nach Anspruch 14, ferner versehen mit einem Schulterbereich des Graphitsubstratteils an jedem Ende des freiliegenden Teils davon, auf den eine feuerfeste Beschichtungslage aufgebracht werden soll.

16. Graphitsubstratteil nach Anspruch 14, ferner versehen mit in Umfangsrichtung verlaufenden Nuten in dem Graphitsubstratteil an jedem Ende des freiliegenden Teils davon, auf den eine feuerfeste Beschichtungslage aufgebracht werden soll.

17. Graphitsubstratteil nach Anspruch 14, bei welchem die axialen Nuten unterbrochen sind, um für Spalte in den Nuten in einer axialen Richtung zu sorgen.

18. Graphitsubstratteil nach Anspruch 17, bei welchem die Spalte zwischen den unterbrochenen Abschnitten der axialen Nuten von einer axial ausgerichteten Nut zur nächsten versetzt sind.

19. Graphitsubstratteil nach Anspruch 16, bei welchem die in Umfangsrichtung verlaufenden Nuten unterbrochen sind, um für Spalte in den Nuten in einer Umfangsrichtung zu sorgen.

20. Graphitsubstratteil nach Anspruch 14, bei welchem das Graphitsubstratteil ein Graphitstator ist.

## Revendications

1. Pièce en graphite apte à être utilisée dans la chambre d'affinage d'un système d'affinage d'aluminium et ayant une protection à l'encontre d'une cassure prématurée due à l'oxydation de celle-ci, comportant :
(a) une pièce en graphite formant substrat, apte à être positionnée dans la chambre d'affinage, ladite pièce en graphite formant substrat, ou une partie de celle-ci, étant exposée à une atmosphère oxydante pendant des périodes à vide du fonctionnement dudit système d'affinage d'aluminium, au moins la partie exposée de ladite pièce en graphite formant substrat ayant des gorges formées sur celle-ci destinées à être remplies d'un matériau de revêtement réfractaire lors d'un revêtement d'une couche de revêtement réfractaire sur celle-ci ;
(b) une couche de revêtement réfractaire déposée sur ladite partie exposée de la pièce en graphite formant substrat, le matériau du revêtement réfractaire remplissant les gorges de ladite pièce en graphite formant substrat, lesdites gorges et ledit revêtement réfractaire disposé dans celles-ci étant positionnés de manière à bloquer la couche de revêtement réfractaire sur la pièce en graphite formant substrat, empêchant ainsi un mouvement non-voulu de la couche de revêtement réfractaire sur la surface de la pièce en graphite formant substrat,
ce par quoi la couche de revêtement réfractaire a une résistance améliorée à l'impact, minimisant la détérioration de celle-ci pendant une manipulation, installation et utilisation dans des opérations d'affinage d'aluminium et lors d'opérations de nettoyage dans la chambre d'affinage, augmentant ainsi la durée de vie de la pièce en graphite et empêchant une cassure prématurée de celle-ci.

2. Pièce en graphite selon la revendication 1, dans laquelle la partie exposée de la pièce en graphite formant substrat est une surface plate, lesdites gorges étant agencées essentiellement selon un motif carré, de sorte que les forces latérales d'un impact sur la couche de revêtement réfractaire sont transmises sur la pièce en graphite formant substrat plat, augmentant ainsi fortement la résistance de la couche de revêtement réfractaire à une détérioration par impact.

3. Pièce en graphite selon la revendication 1, dans laquelle la partie exposée de la pièce en graphite formant substrat est une surface cylindrique, lesdites gorges étant alignées dans une direction axiale, de sorte que les forces latérales d'un impact sur la couche de revêtement réfractaire sont transmises à la pièce en graphite formant substrat cylindrique, augmentant ainsi de manière importante la force d'impact, ou le nombre d'impacts, ayant pour résultat une craquelure de la couche de revêtement réfractaire et augmentant de manière importante la résistance de la couche de revêtement réfractaire vis-à-vis d'une poussée en dehors de la surface de ladite surface cylindrique de la pièce en graphite formant substrat.

4. Pièce en graphite selon la revendication 3 et comportant une partie d'épaulement dans ladite pièce en graphite formant substrat au niveau de chaque extrémité de la partie exposée de celle-ci ayant ladite couche de revêtement réfractaire déposée sur celle-ci, augmentant ainsi la résistance de ladite couche de revêtement réfractaire au déplacement dans une direction axiale lors d'un impact à proximité de l'une ou l'autre des extrémités axiales de ladite couche de revêtement réfractaire.

5. Pièce en graphite selon la revendication 3 et comportant des gorges circonférentielles dans ladite pièce formant substrat au niveau de chaque extrémité de la pièce exposée de celle-ci ayant ladite couche de revêtement réfractaire déposée sur celle-ci, augmentant ainsi la résistance par ladite couche de revêtement réfractaire au déplacement dans une direction axiale lors d'un impact à proximité de l'une ou l'autre des extrémités axiales de ladite couche de revêtement réfractaire.

6. Pièce en graphite selon la revendication 5 et comportant une ou plusieurs gorges circonférentielles supplémentaires dans ladite pièce de graphite formant substrat au niveau d'emplacements intermédiaires entre les extrémités de la partie exposée de ladite pièce de graphite formant substrat.

7. Pièce en graphite selon la revendication 3, dans laquelle lesdites gorges axiales sont interrompues, de manière à fournir des espaces dans lesdites gorges dans une direction axiale.

8. Pièce en graphite selon la revendication 7, dans laquelle lesdits espaces situés entre les parties interrompues des gorges axiales sont étagées à partir d'une gorge à direction axiale jusqu'à ladite gorge à direction axiale suivante.

9. Pièce en graphite selon la revendication 5, dans laquelle lesdites gorges circonférentielles sont interrompues, de manière à fournir des espaces dans lesdites gorges dans une direction circonférentielle.

10. Pièce en graphite selon la revendication 9, dans laquelle lesdites gorges axiales sont interrompues de manière à fournir des espaces dans lesdites gorges dans une direction axiale.

11. Pièce en graphite selon la revendication 3, dans laquelle ladite pièce en graphite comporte un stator en graphite.

12. Pièce en graphite formant substrat, apte à être utilisée dans la chambre d'affinage d'un système d'affinage d'aluminium et apte à être positionnée dans la chambre d'affinage, ladite pièce en graphite formant substrat, ou une partie de celle-ci, étant exposée à une atmosphère oxydante pendant des périodes à vide du fonctionnement dudit système d'affinage d'aluminium, la partie exposée de ladite pièce en graphite formant substrat ayant des gorges sur celle-ci destinées à être remplies d'un matériau de revêtement réfractaire lors du revêtement d'une couche de revêtement réfractaire sur celle-ci, lesdites gorges étant positionnées de sorte que, lors du remplissage de celles-ci avec un matériau de revêtement réfractaire lors du dépôt de ladite couche réfractrice sur celle-ci, la couche de revêtement réfractaire est bloquée sur la pièce en graphite formant substrat, empêchant ainsi un mouvement non-voulu de la couche de revêtement réfractaire sur la surface de la pièce en graphite formant substrat,
ce par quoi la couche de revêtement réfractaire déposée sur ladite pièce en graphite formant substrat a une résistance améliorée à l'impact, minimisant la détérioration de celle-ci pendant une manipulation, installation et utilisation pendant des opérations d'affinage d'aluminium et pendant des opérations de nettoyage de la chambre d'affinage, augmentant ainsi la durée de vie de la pièce en graphite et empêchant une cassure prématurée de celle-ci.

13. Pièce en graphite formant substrat selon la revendication 12, dans laquelle la partie exposée de la pièce en graphite formant substrat est une surface plate, lesdites gorges étant agencées essentiellement selon un motif carré, de sorte que les forces latérales d'un impact sur un revêtement réfractaire déposé sur la partie exposée de la pièce en graphite formant substrat sont transmises à la pièce formant substrat plat, augmentant ainsi de manière importante la résistance de la couche de revêtement réfractaire à l'encontre d'une détérioration par impact.

14. Pièce en graphite formant substrat selon la revendication 12, dans laquelle la partie exposée de la pièce en graphite formant substrat est une surface cylindrique, lesdites gorges étant alignées dans une direction axiale.

15. Pièce en graphite formant substrat selon la revendication 14, et comportant une partie d'épaulement de ladite pièce en graphite formant substrat au niveau de chaque extrémité de la partie exposée de celle-ci destinée à être revêtue d'une couche de revêtement réfractaire.

16. Pièce en graphite formant substrat selon la revendication 14, et comportant des gorges circonférentielles dans ladite pièce en graphite formant substrat au niveau de chaque extrémité de la partie exposée de celle-ci destinée à être revêtue d'une couche de revêtement réfractaire.

17. Pièce en graphite formant substrat selon la revendication 14, dans laquelle lesdites gorges axiales sont interrompues de manière à fournir des espaces dans lesdites gorges dans une direction axiale.

18. Pièce en graphite formant substrat selon la revendication 17, dans laquelle lesdits espaces situés entre les parties interrompues des gorges axiales sont étagés à partir d'une gorge à direction axiale jusqu'à la gorge à direction axiale suivante.

19. Pièce en graphite formant substrat selon la revendication 16, dans laquelle lesdites gorges circonférentielles sont interrompues, de manière à fournir des espaces dans lesdites gorges dans une direction circonférentielle.

20. Pièce en graphite formant substrat selon la revendication 14, dans laquelle ladite partie de graphite formant substrat constitue un stator en graphite.
